# EUROPEAN PATENT SPECIFICATION

(11) **EP 3 190 009 B1**
(45) Date of publication and mention of the grant of the patent: **31.07.2019**
(21) Application number: 15837397.7
(22) Date of filing: 31.08.2015
(51) Int. Cl.: B60R 21/237, B60R 21/207

(54) **VEHICLE-USE SIDE AIR BAG MODULE MANUFACTURING METHOD AND VEHICLE-USE SIDE AIR BAG DEVICE**
HERSTELLUNGSVERFAHREN FÜR SEITENAIRBAGMODUL ZUR FAHRZEUGVERWENDUNG UND SEITENAIRBAGVORRICHTUNG ZUR FAHRZEUGVERWENDUNG
PROCÉDÉ DE FABRICATION D'UN MODULE DE COUSSIN D'AIR LATÉRAL POUR L'UTILISATION DANS UN VÉHICULE ET DISPOSITIF DE COUSSIN D'AIR LATÉRAL POUR L'UTILISATION DANS UN VÉHICULE

(30) Priority: 04.09.2014 JP 2014180200
(43) Date of publication of application: 12.07.2017
(60) Divisional application: 18177253.4
(73) Proprietor: Autoliv Development AB, 447 83 Vårgårda (SE)
(72) Inventor: KOBAYASHI Yuto, Yokohama-shi Kanagawa 222-8580 (JP); FUMA Makoto, Yokohama-shi Kanagawa 222-8580 (JP); NOGAMI Mitsuo, Yokohama-shi Kanagawa 222-8580 (JP); FUKUDA Hideho, Yokohama-shi Kanagawa 222-8580 (JP); NAKAJIMA Yutaka, Yokohama-shi Kanagawa 222-8580 (JP); TAGUCHI Hiroyuki, Yokohama-shi Kanagawa 222-8580 (JP)
(74) Representative: Müller Verweyen
(86) International application number: PCT/JP2015/074663
(87) International publication number: WO 2016/035746

(56) References cited:
- WO-A1-2010/053088
- JP-A- H08 268 206
- JP-A- H11 180 243
- JP-A- H11 310 101
- JP-A- 2001 171 468

## Description

### [Technical Field]

The present invention relates to a method for manufacturing a vehicle side airbag module and a vehicle side airbag device, with which it is possible to reduce, in length and diameter, the storage size of a side airbag that has an inflator storing region for storing an inflator and is folded into a stored state.

### [Background Art]

PTL 1 and PTL 2 each disclose a method for manufacturing a vehicle side airbag module having a side airbag that is inflated and deployed to a side of a seat from a seat back by inflator gas ejected from an inflator stored inside and adapted to restrict the movement of an occupant sitting in the seat in a vehicle widthwise direction.

PTL 1 is directed to providing an "airbag device for side collision" capable of positioning a folded airbag in the vicinity of an upper end of a seat back of a seat without hindering smooth inflation of the airbag, and the airbag device for side collision has the folded airbag provided on the upper side of the seat back of the seat. The airbag includes a lower chamber attached and fixed to a seat frame in a plurality of locations in in the up-down direction on a rear edge side thereof to serve as an upstream location for inflation gas and an upper chamber provided above a front side of the lower chamber and is folded and stored so as to be, during inflation, projected forward and deployed upward. The airbag is stored after being folded in the following manner. The airbag is provided with radial folding lines, which radiate from the upper side of the lower chamber on the rear edge side serving as the center of radiation, such that the upper chamber and the lower chamber are folded in a sector manner on the rear edge side of the lower chamber. According to the disclosure of PTL 1, the center for the folding lines is set on the outer contour of the airbag in a flat, development state.

PTL 2 is directed to providing a "side airbag device" adapted to facilitate the operation of folding an airbag and allow the airbag to be positioned quickly on a side of an occupant immediately after inflation starts, and in the side airbag device, the folded airbag is stored at a side surface of the seat back on the vehicle outer side in an inflatable and deployable manner. The airbag includes a base part as an upstream side of inflation gas during inflation and deployment and a main body part to be positioned in front of the base part during inflation and deployment. The main body part includes a lower inflation part to be positioned in front of the base part during inflation and deployment and an upper inflation part in communication with the upper part of the lower inflation part. The airbag is stored after being folded in the following manner. The airbag in a flat, development state has the upper inflation part folded onto the lower inflation part, and is then folded along radial folding lines, which radiate from an upper location of the base part serving as the center of radiation, in an inward rolling manner from the upper edge side towards the base part side. In PTL 2, the center for the folding lines is set outside the outer contour of the airbag in a flat, development state.

### [Citation List]

### [Patent Literature]

[PTL 1] Japanese Patent Application Publication No. H11-180243
[PTL 2] Japanese Patent Application Publication No. 2001-171468 A, disclosing the preamble of claim 1.

### [Summary of Invention]

### [Technical Problem]

In PTL 1, the center for the folding lines along which the airbag is folded into a stored state is set on the outer contour of the airbag spread out flat in a development state. Therefore, when the outer size of the airbag is large, the outer shape of the airbag folded along the folding lines is affected by the extension of the outer edge of the airbag, i.e. by the size of the airbag itself, and assumes a lengthy cone shape, depriving the stored airbag of the possibility to have a compact shape.

In PTL 2, the center for the folding lines along which the airbag is folded into a stored state is set outside the outer contour of the airbag spread out flat in a development state. Therefore, the outer shape of the airbag folded along the folding lines is affected by the size of the airbag itself and assumes a lengthy cone shape similarly to PTL 1, depriving the stored airbag of the possibility to have a compact shape.

In addition, in PTL 2, the center for the folding lines is set outside the outer contour of the airbag, and a margin or allowance is provided for rolling of the airbag accordingly, so that the diameter of the roll also increases.

The present invention has been devised in view of the above problems in the prior art, and it is an object of the invention to provide a method for manufacturing a vehicle side airbag module and a vehicle side airbag device, with which it is possible to reduce, in length and diameter, the storage size of a side airbag that has an inflator storing region for storing an inflator and is folded into a stored state.

### [Solution to Problem]

A method for manufacturing a vehicle side airbag module according to the present invention produces a vehicle side airbag module having a side airbag inflated and deployed from a seat back to a vehicle front side through a side of a seat by inflator gas ejected from an inflator stored inside, the side airbag has an inflator storing region provided on a rear side in a vehicle front-back direction to store the inflator, and the method includes the step of folding an upper region of the side airbag above a folding line on a lower region thereof under the folding line along the folding line, and setting on the side airbag a folding region for folding the side airbag into a cone shape having a tapered upper part and a widened lower part, wherein the folding line is set across the side airbag from a vehicle rear side to a vehicle front side, and the step of folding the folding region toward the inflator storing region with respect to at least one folding center set on the folding line as a reference for staring folding and forming a folded part, wherein the folding line defines an upper edge of the folding region, wherein the folding center is set on the bag surface in the side airbag before the folding step.

Preferably, the side airbag further includes a rear chamber or an inner bag having the inflator storing region, the rear chamber or the inner bag has a vent hole provided at an upper part thereof in a vehicle up-down direction to introduce, from the rear chamber or the inner bag into the side airbag, inflator gas from the inflator, and the folding line is provided above the vent hole in the vehicle up-down direction.

The folded part is preferably formed by rolling. The method preferably includes reversely folding the folded part formed by the rolling against the inflator storing region in a direction reversed from the rolling direction or folding the folded part formed by the rolling against the inflator storing region in the same direction as the rolling direction.

The folded part is preferably formed by a bellows fold. The method preferably includes additionally folding the entire folded part formed by the bellows fold so that the size of the folded part is halved in the vehicle front-back direction.

In the folding step, the upper region is preferably folded on the lower region or the upper region is tucked in the lower region.

The folding line is preferably set in a position higher than the inflator storing region in a height-wise direction. The folding line may be set inclined obliquely from the vehicle rear side to the vehicle front side.

In the vehicle side airbag device according to the present invention, the side airbag module manufactured by the above method for manufacturing a vehicle side airbag module is provided at the seat, and the side airbag is inflated and deployed by inflator gas, so that an occupant sitting in the seat is restricted from moving in a vehicle widthwise direction.

In the vehicle side airbag device according to the present invention, the vehicle side airbag module manufactured by the above method for manufacturing a vehicle side airbag module is provided at the seat, and the side airbag is inflated and deployed by inflator gas, so that an occupant sitting in the seat is protected upon a collision from a side of the vehicle.

### [Advantageous Effects of Invention]

With the method for manufacturing a vehicle side airbag module and the vehicle side airbag device according to the present invention, the storage size of the side airbag that has the inflator storing region for storing the inflator and is folded into a stored state can be reduced in length and diameter. Since the number of times of folding can be reduced, man-hours for folding can be reduced, while the time for deployment can be reduced during deployment, so that the deployment performance can be improved.

### [Brief Description of Drawings]

Fig. 1 is a plan view of a side airbag in a vehicle side airbag module manufactured by a method for manufacturing a vehicle side airbag device and a vehicle side airbag module according to the present invention showing from above the side airbag in an inflated and deployed state in a vehicle interior.
Fig. 2 is a view for illustrating a first step in assembling procedure in a method for manufacturing a vehicle side airbag device and a vehicle side airbag module including the side airbag shown in Fig. 1 according to a preferred embodiment of the present invention.
Fig. 3 is a view for illustrating a second step in the assembling procedure.
Fig. 4 is a view for illustrating a third step (folding step) in the assembling procedure.
Fig. 5 is a view of illustrating a fourth step (rolling up step) in the assembling procedure.
Fig. 6 is a front view of a rolled part of a vehicle aide airbag module produced by the fourth step in the assembling procedure.
Fig. 7 is a sectional view taken along line A-A in Fig. 6.
Fig. 8 is a view for illustrating a fifth step (reverse folding step) in the assembling procedure.
Fig. 9 is a front view of the outer shape of the vehicle side airbag module obtained by the fifth step in the assembling procedure.
Fig. 10 is a sectional view taken along line B-B in Fig. 9.
Fig. 11 is a view for illustrating folding operation after the fifth step in the assembling procedure.
Fig. 12 is a sectional view corresponding to Fig. 7 showing a modification of the embodiment.
Fig. 13 is a view corresponding to Fig. 8 illustrating a modification of the embodiment.
Fig. 14 is a sectional view corresponding to Fig. 10 showing a modification of the embodiment.
Fig. 15 is a view corresponding to Fig. 4 illustrating another modification of the embodiment.
Fig. 16 is a view in the direction of the arrow C in Fig. 15.
Fig. 17 is a view for illustrating modifications of a method of manufacturing a vehicle side airbag device and a vehicle side airbag module according to the present invention.

### [Description of Embodiments]

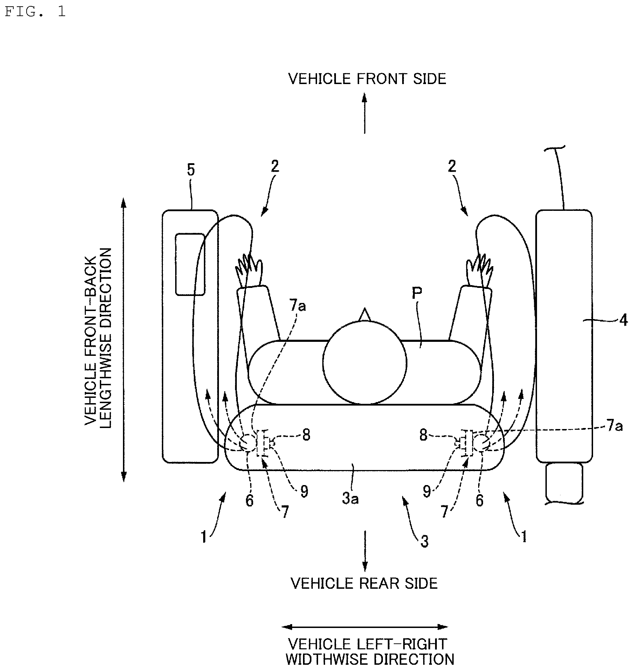

Now, a method for manufacturing a vehicle side airbag module and a vehicle side airbag device according to a preferred embodiment of the present invention will be described in conjunction with the accompanying drawings. Fig. 1 is a plan view of a side airbag in the vehicle side airbag device and the vehicle side airbag module according to the embodiment showing from above the side airbag in an inflated and deployed state in a vehicle interior. According to the embodiment described in detail herein, rolling up and bellows-folding are equivalent in terms of folding operation, and therefore the folding operation by rolling up will be described with reference to Figs. 1 to 16 by way of illustration.

Side airbags 2 in a vehicle side airbag module 1 are stored in a rolled-up manner inside a seat back 3a of a seat 3 provided in a vehicle before being inflated and deployed. An occupant P sits in the seat 3. Vehicle components such as a door 4 (on the vehicle outer side) and a console box 5 (on the vehicle inner side) on the center side in the vehicle widthwise direction are provided on the sides of the occupant P in the vehicle widthwise direction, in other words, facing the sides of the occupant P on both sides in the left-right, vehicle widthwise direction of the seat 3.

As is well-known from the conventional device, the side airbags 2 are provided inflatable and deployable from the seat back 3a to the seat 3 between the occupant P and the vehicle components such as the door 4 and the console box 5 on the sides of the occupant P in the vehicle widthwise direction and further ahead of the seat 3 (to the vehicle front side) through the sides of the seat 3 in other words forward in the vehicle front-back lengthwise direction (hereinafter referred to as the vehicle front-back direction) upon impact given to the vehicle for example in a side collision.

The side airbags 2 in a stored state are inflated and deployed as inflator gas ejected from an inflator 6 stored in the side airbags 2 are filled within the side airbag 2. The side airbag 2 is normally inflated and deployed within a height range exceeding the area from the hips to the head of the occupant P, and when the side airbag 2 is made to function as a far side airbag, the movement of the occupant P sitting in the seat 3 in the vehicle widthwise direction is restricted, so that the occupant P can be prevented from interfering with a fellow passenger or the vehicle components such as the console box 5 in a collision from a side of the vehicle, the occupant P can be thus protected, and injury values associated with the occupant P can be reduced. When the side airbag is made to function as a near side airbag, the side airbag is adapted to protect the occupant P sitting in the seat 3 from a vehicle component such as the door 4 coming into the vehicle interior during a collision from a side of the vehicle and reduce injury values associated with the occupant P.

A seat frame 7 adapted to receive and support for example the body of the occupant P leaning against the seat back is provided in the seat back 3a. The seat frame 7 has a flat part facing the vehicle component such as the door 4, and according to the embodiment, the flat part forms a support surface 7a to be attached with the inflator 6 and support the side airbag 2 to be inflated and deployed.

A stud bolt 8 to be fixed with a nut 9 to the support surface 7a of the seat frame 7 in the seat back 3a is integrally provided at one side surface of the inflator 6. The inflator 6 is disposed in the seat back 3a as the stud bolt 8 is fixed to the seat frame 7. The inflator 2 is also stored in the side airbag 2 as described above.

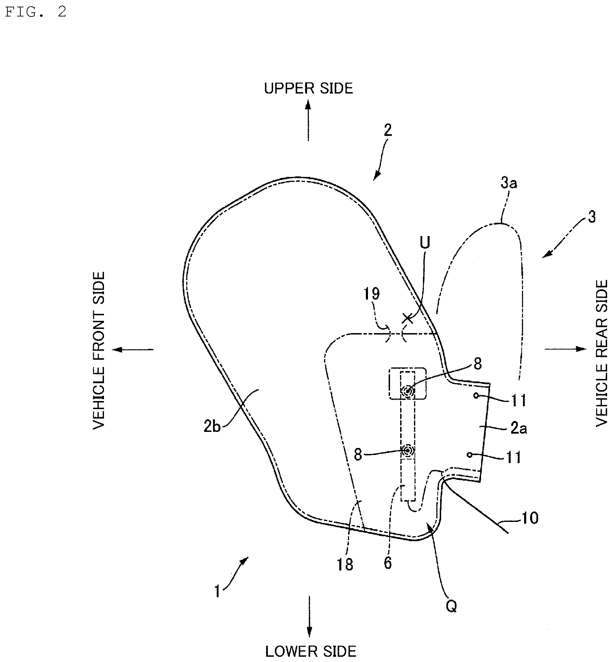

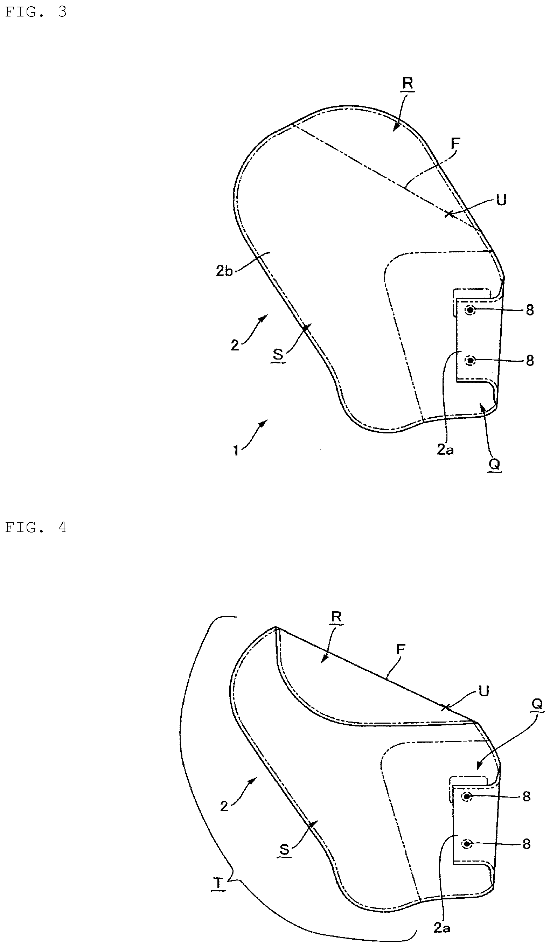

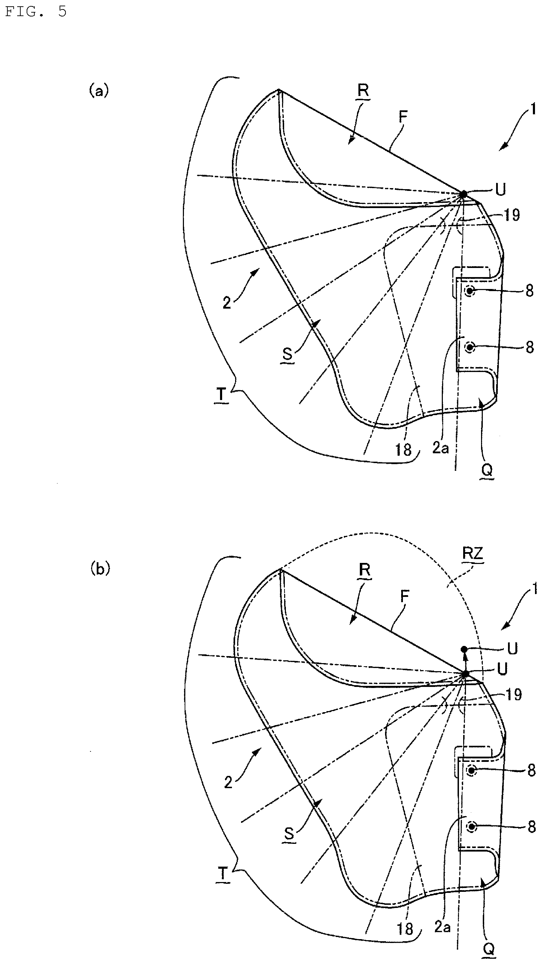

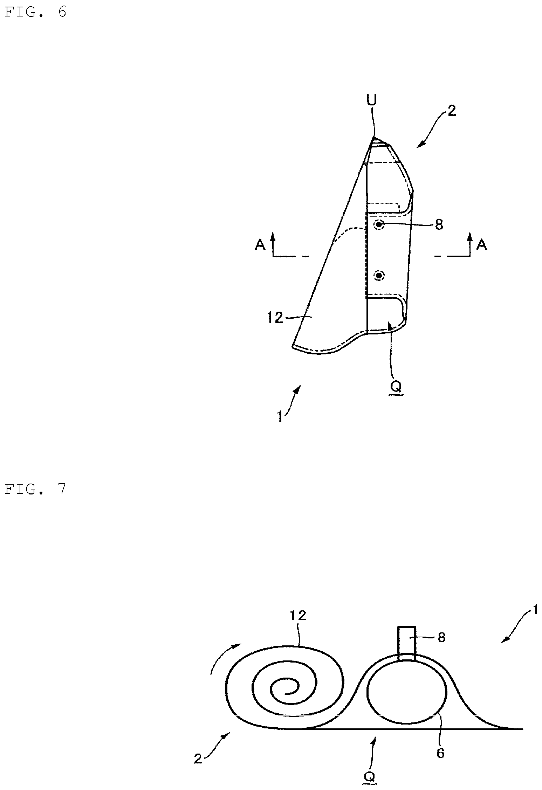

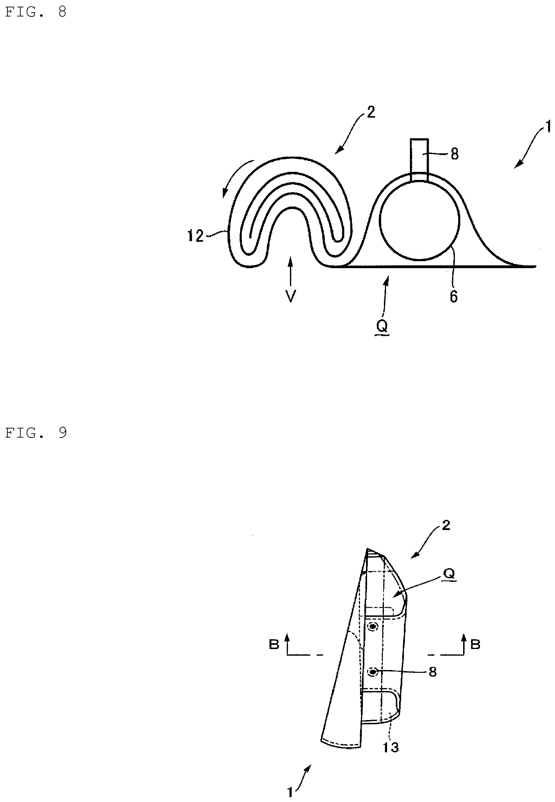

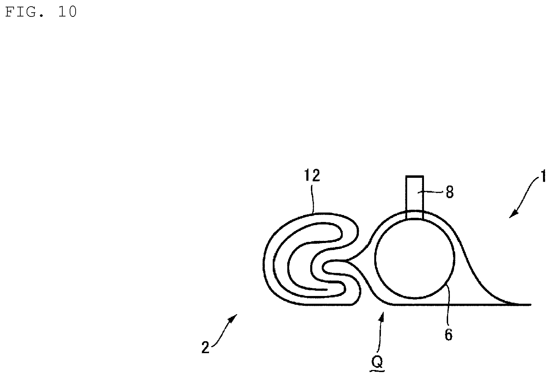

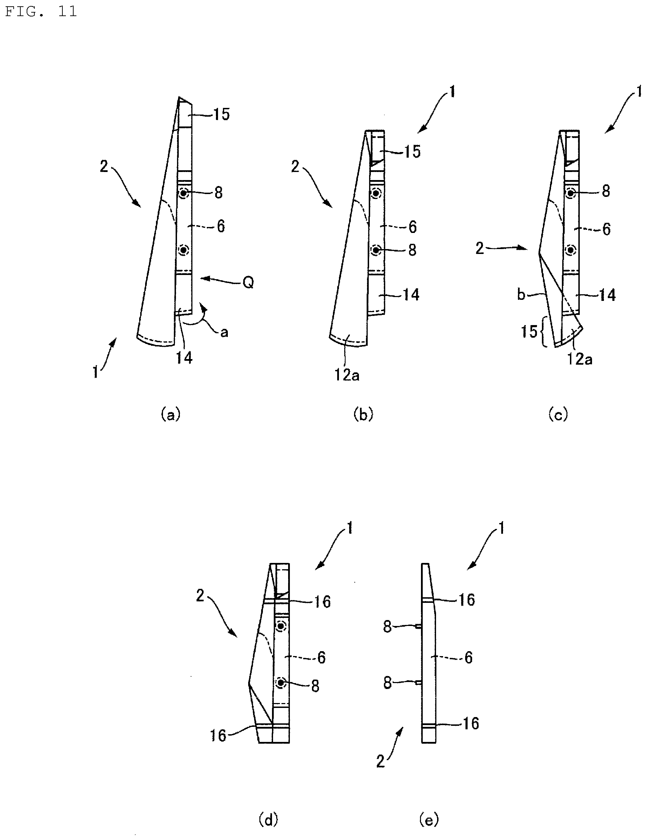

Now, a method for manufacturing a vehicle side airbag module 1 according to the embodiment will be described according to the assembling procedure shown in Figs. 2 to 11. Fig. 2 is a view for illustrating a first step in the assembling procedure for the vehicle side airbag module, an inflated state of which is shown in Fig. 1, Fig. 3 is a view for illustrating a second step in the assembling procedure, Fig. 4 is a view for illustrating a third step (folding step) in the assembling procedure, Fig. 5 is a view for illustrating a fourth step (rolling up step) in the assembling procedure, in Fig. 5(a), the rolling-up center is shown as a reference for the start of rolling up, in Fig. 5(b), the rolling-up center moves, Fig. 6 is a front view of the rolled part in the vehicle side airbag module produced in the fourth step in the assembling procedure, Fig. 7 is a sectional view taken along line A-A in Fig. 6, Fig. 8 is a view for illustrating a fifth step (reverse folding step) in the assembling procedure, Fig. 9 is a front view of an outer shape of the vehicle side airbag module obtained by the fifth step in the assembling procedure, Fig. 10 is a sectional view taken along line B-B in Fig. 9, and Fig. 11 is a view for illustrating folding operation after the fifth step in the assembling procedure.

In the following description of the embodiment, the side airbag module 1 refers to a unit having the rolled-up side airbag 2 storing the inflator 6 and stored in the seat 3.

As illustrated in Fig. 2, as is well known from the conventional device, the side airbag 2 is formed into a bag shape having an opening part 2a for example by placing two pieces of ground fabric on each other or folding one piece of ground fabric in half, then joining the edges for example by sewing. In the illustrated side airbag 2, the opening part 2a is formed to project to the vehicle rear side in a location to correspond to the rear end of the side airbag 2 in the vehicle front-back direction when the side airbag is inflated and deployed.

The side airbag 2 includes a rear chamber 18 formed by a partition on the rear side in the vehicle front-back direction. Instead of the rear chamber 18, an inner bag may be positioned in a similar location to the rear chamber 18 and stored in the side airbag 2. The rear chamber 18 will be described by way of illustration.

The inflator 6 is stored in the rear chamber 18 through the opening part 2a of the side airbag 2 and provided on the rear side in the vehicle front-back direction of the side airbag 2. Therefore, in the side airbag 2 according to the embodiment, a region in the rear chamber 18 on the rear side in the vehicle front-back direction is formed as an inflator storing region Q for storing the inflator 6. The stud bolt 8 for the inflator 6 is projected outside the side airbag 2 from a bolt hole formed in the inflator storing region Q. Note that 10 represents a harness.

The rear chamber 18 is provided with a vent hole 19 at an upper part thereof in the vehicle up-down direction, through which inflator gas from the inflator 6 is introduced from the rear chamber 18 into the side airbag 2.

According to the embodiment, the outer shape of the side airbag 2 has a larger size in the vehicle up-down direction than in the vehicle front-back direction. The side airbag 2 is generally directed obliquely upward from the inflator storing region Q toward the front in the vehicle front-back direction.

Stated differently, the part of the side airbag 2 higher than the inflator storing region Q is formed to gradually rise obliquely upward on the front side in the vehicle front-back direction. When the side airbag 2 is formed in this way, the range from the hips to the head of the occupant P that could move toward the front and the side in the vehicle widthwise direction in a side collision can be received and restrained by the entire side airbag 2 for protection.

Then, as illustrated in Fig. 3, the opening part 2a of the side airbag 2 is folded back toward the front in the vehicle front-back direction to be placed on the inflator storing region Q. The opening part 2a is provided with a through hole 11 through which the stud bolt 8 projecting from the side airbag 2 is passed (see Fig. 2). Therefore, the opening part 2a is placed on the inflator storing region Q on the rear side of the side airbag 2 in the vehicle front-back direction.

Then, as illustrated in Fig. 4, the side airbag 2 is subjected to the folding step. In the folding step, a folding line F along which the side airbag 2 is folded is set, and an upper region R above the folding line F is folded on a lower region S under the folding line F, so that a rolling region (folding region) T excluding the inflator storing region Q is set.

The folding line F is set in a position excluding the inflator storing region Q, more specifically in a position higher than the inflator storing region Q in the height-wise direction. Even more specifically, the folding line F is set above the vent hole 19 formed in the rear chamber 18 in the vehicle up-down direction. In this way, the folding line F does not interfere with the inflator storing region Q. The folding line F is set transversely across the side airbag 2 from the rear side to the front side of the vehicle. More specifically, the folding line F is basically set so that the side airbag 2 is folded in the up-down direction.

As illustrated, the folding line F may be inclined obliquely upward or obliquely downward from the rear side to the front side of the vehicle if the folding line is arranged laterally. The upper region R is folded on the lower region S along the folding line F, so that the rolling region T is set excluding the inflator storing region Q on the front side in the vehicle front-back direction ahead of the inflator storing region Q. In the illustrated example, the upper region R is folded on the lower region S.

As shown in Figs. 5 to 7, the side airbag 2 is then subjected to the rolling up step (folding step). Fig. 5(a) shows the outer shape of the side airbag 2 before the rolling up step, Fig. 6 shows the outer shape after the rolling up step, and Fig. 7 shows a section of the side airbag 2 after the rolling up. In the rolling up step, a rolling-up center (folding center) U for rolling up (folding) is set at least in one location, and rolling by rolling up the rolling region T is carried out with respect to the rolling-up center U as a reference for the start of rolling (folding), so that a rolled part (folded part) 12 is formed.

The rolling-up center U is set in a location on the folding line F. As can be understood from Figs. 2 to 4, the folding line F allows the side airbag 2 to be folded and parts thereof to be placed on each other and therefore already exists on a bag surface 2b of the side airbag 2 in a development state before the folding step, and the rolling-up center U positioned on the folding line F is also positioned on the bag surface 2b of the side airbag 2 in the development state before the folding step similarly to the folding line F.

The folding line F defines an upper edge of the rolling region T, and therefore the rolling-up center U is positioned at the upper edge of the rolling region T. In the above configuration, the rolling-up center U is set on the bag surface 2b of the side airbag 2 more on the inner side than outer contour of the side airbag 2, and the outer size of the side airbag 2 to be rolled up, particularly the outer size in the direction across the folding line F is smaller than the original outer size of the side airbag 2 in a development state.

As is well known from the conventional device, the rolling region T (the folding region) is rolled up (folded) into a cone shape so that the side of the rolling-up center U positioned at the upper edge of the rolling region T is arranged on the upper side and the outer edge side of the side airbag 2 radially widened from the rolling-up center U is arranged on the lower side.

The rolling up is also carried out from the side of the folding line F as a starting end toward the side of the inflator storing region Q as a termination. The rolling up may be carried out clockwise or anti-clockwise. The rolled part 12 formed in the rolling up step is arranged next to the inflator 6 stored in the inflator storing region Q as shown in Figs. 6 and 7.

The thickness of ground fabric may affect an actual rolling up process, and the rolling-up center U set on the folding line F may be shifted. The case in which the rolling-up center U is shifted from the folding line F also falls within the scope of the present invention. More specifically, as illustrated in Fig. 5(b), the rolling-up center U may move onto the bag surface 2b in the upper region R of the side airbag 2 in a spread-out development state before the folding step in the rolling up step carried out to form the rolled part 12. Therefore, the present invention also covers the case in which the rolling-up center U is set in a region RZ vacating the upper region R as the upper region R is folded on the lower region S.

As shown in Figs. 8 to 10, the side airbag 2 is subjected to the reverse folding step. Fig. 8 shows a section of the side airbag 2 while the reverse folding step thereto is in progress, Fig. 9 shows the outer shape of the side airbag 2 and a periphery thereof after the reverse folding step, and Fig. 10 shows a section thereof after the reverse folding step.

In the reverse folding step, the rolled part 12 shown in Figs. 6 and 7 is folded so that its section is halved as shown in Fig. 8 (indicated by the arrow V in the drawing), and the folded rolled part 12 is folded back reversely from the rolling up direction of the rolling region T (in the opposite direction to the rolling direction) so that the folded rolled part 12 is arranged to fit along the side of the inflator 6. The outer diameter size of the vehicle side airbag module 1 is halved and narrowed by the reverse folding.

Figs. 11(a) to 11(e) sequentially show the operation of folding after the reverse folding step. Fig. 11(e) shows the outer shape of the vehicle side airbag module 1 turned 90° from the state shown in Fig. 11(d), and the stud bolt 8 is indicated.

In Fig. 11(a), in the inflator storing region Q, a folded-back part 13 (see Fig. 9) of the opening part 2a extending to the rear side in the vehicle front-back direction beyond the position of the inflator 6 is folded to the opposite side to the rolled part 12 and to the front in the vehicle front-back direction (indicated by the arrow a in the drawing) to overlap the inflator 6, and the folded back part is made to function as a holder part 14 that will be described.

In Fig. 11(b), an upward extension 15 (see Fig. 11(a)) extending above the position of the inflator 6 is folded downward to the side of the rolled part 12. In Fig. 11(c), the widened lower part 12a of the rolled part 12 (see Fig. 11(b)) is folded to the vehicle rear side along an oblique folding line b facing the front side in the vehicle front-back direction and held under the holder part 14 below the position of the inflator 6.

In Figs. 11(d) and 11(e), a downward extension 15 (see Fig. 11(c)) extending downward below the position of the inflator 6 is folded upward to the opposite side to the rolled part 12. In the state, a pair of upper and lower binding bands 16 is tied around the vehicle side airbag module 1 in locations above and below the position of the inflator 6, and the binding bands 16 are fastened, so that the inflator 6 attains a stored state and the vehicle side airbag module 1 stored in the seat 3 is complete.

The inflator 6 may be stored in the side airbag 2 any time before attaching the binding bands 16 adapted to bind the rolled up and stored side airbag 2 in a releasable manner, and the inflator may be stored in the inflator storing region Q previously before folding the side airbag 2 or even thereafter, before the opening part 2a is folded back as the holder part 14.

In a method for manufacturing the vehicle side airbag module 1 and in a vehicle side airbag device according to the embodiment, the side airbag 2 is provided with an inflator storing region Q positioned on the rear side in the vehicle front-back direction to store the inflator 6, the method includes the step of folding the upper region R of the side airbag 2 above the folding line F on the lower region S thereof under the folding line F along the lateral folding line F from the vehicle rear side to the vehicle front side excluding the inflator storing region Q and setting the rolling region T and the step of rolling up the rolling region T toward the inflator storing region Q with respect to a single rolling-up center U set on the bag surface 2b in the side airbag 2 in a development state before the folding step and on the folding line F to be the upper edge of the rolling region T as a reference for the start of rolling to form the rolled part 12, and therefore, the rolling-up center U is set on the bag surface 2b of the side airbag 2 spread out in a development state before the folding step, so that the outer size of the side airbag 2 to be rolled up, particularly the outer size in a direction across the folding line F is smaller than the outer size of the original side airbag 2 spread out in a development state.

In this way, the size of the stored side airbag 2 having the inflator storing region Q for storing the inflator 6 and folded into a stored state by rolling up may be reduced in length and the diameter of the rolled-up airbag may also be reduced.

The rolled-up side airbag 2 can be folded into a further compact state by the reverse folding step.

As described above, according to the method for manufacturing the vehicle side airbag module 1 and the vehicle side airbag device according to the embodiment, the side airbag 2 desired to be inflated and deployed in a large area can be stored in a compact state as appropriate.

The side airbag 2 is further provided with the rear chamber 18 having the inflator storing region Q, and the rear chamber 18 has the vent hole 19 at an upper part thereof in the vehicle up-down direction through which inflator gas from the inflator 6 is introduced from the rear chamber 18 to the side airbag 2. The side airbag 2 moves up and down by reaction caused by the introduction of the inflator gas, but the vertical movement is not a disadvantage in terms of restraining performance because the shoulders of the occupant P are quickly restrained when the occupant is restrained. In the meantime, if a vent hole is provided on the front side in the vehicle front-back direction, the side airbag 2 should be moved in the front-back direction. The movement in the front-back direction may prevent the side airbags 2 from reaching the positions of the shoulders and head of the occupant P at the start of occupant restraining which may be the most critical moments. In addition, the vent hole 19 provided in the upper part of the rear chamber 18 in the vehicle up-down direction allows the part folded from the folding line F to be quickly deployed. In this way, the vent hole 19 provided in the upper part of the rear chamber 18 in the vehicle up-down direction can provide advantageous effects.

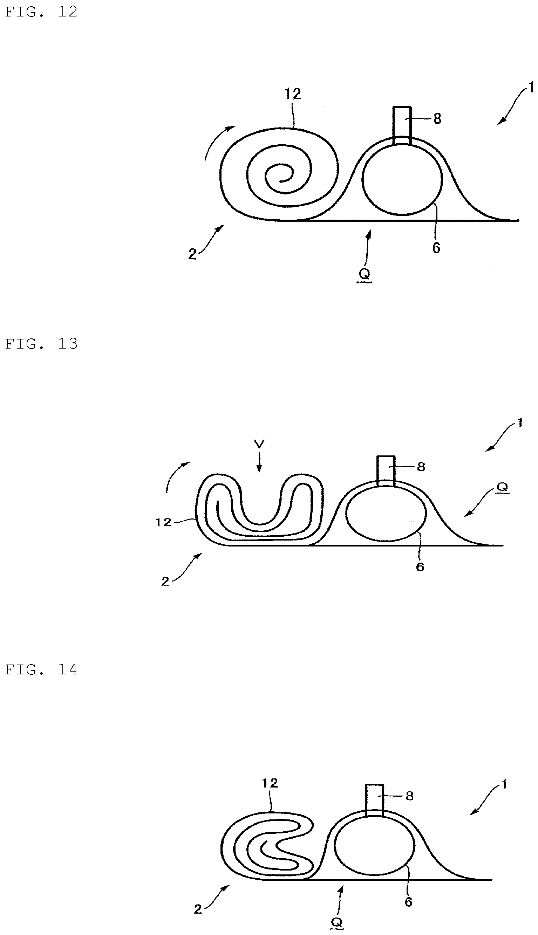

Figs. 12 to 14 show modifications of the reverse folding step shown in Figs. 7, 8 and 10, Fig. 12 shows a section of the side airbag 2 after the side airbag 2 is rolled up similarly to Fig. 7 (see a section taken along line A-A in Fig. 6), Fig. 13 shows a section of the side airbag 2 corresponding to Fig. 8 when the folding back step to the side airbag 2 is in progress, and Fig. 14 shows a section corresponding to Fig. 10 after the folding back (see a section taken along line B-B in Fig. 9).

In the above description of the embodiment, the rolled part 12 is subjected to the reverse folding step and folded in the direction reversed from the rolling up direction for the rolling region T to the inflator storing region Q, while the folding back step may be employed, in which the rolled part 12 is folded so that its section is halved as shown in Fig. 13 (indicated by the arrow V) and the folded rolled part 12 is folded back in the same direction as the rolling up direction for the rolling region T (in the same direction as the rolling direction) so that the rolled part 12 may fit along the side of the inflator 6.

The folding back halves and narrows the outer diameter of the vehicle side airbag module 1 similarly to the reverse folding. The modification can also provide the same advantageous effects as those of the embodiment described above. Note that the reverse folding step allows a margin for folding back to be more easily obtained than the folding back step, and therefore high manufacturing performance can be secured.

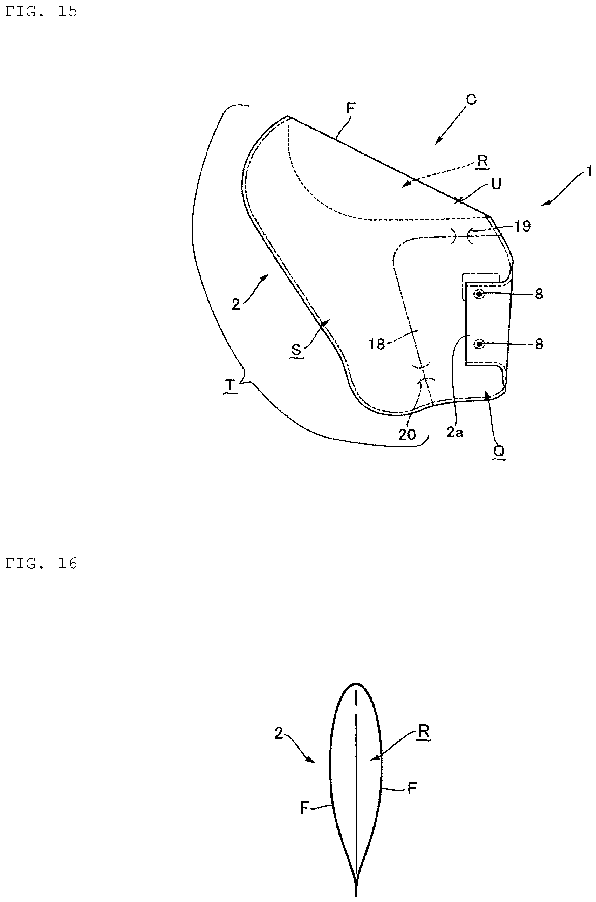

Figs. 15 and 16 show modifications of the step of folding the upper region R on the lower region S. Fig. 15 is a view corresponding to Fig. 4 for the folding step to the side airbag 2, and Fig. 16 is a view in the direction of the arrow C in Fig. 15.

In the modification, the rear chamber 18 is provided with an additional vent hole 20 on the front side in the vehicle front-back direction in addition to the vent hole 19 provided on the upper side in the vehicle up-down direction. It is needless to mention that all the embodiments herein may be provided with two vent holes 19 and 20 in this manner.

In the description of the embodiment, the upper region R is folded on the lower region S, while according to the modification, the upper region R is tucked in the lower region S. It is needless to mention that according to the modification in which the side airbag is tucked in, the same advantageous effects can be provided.

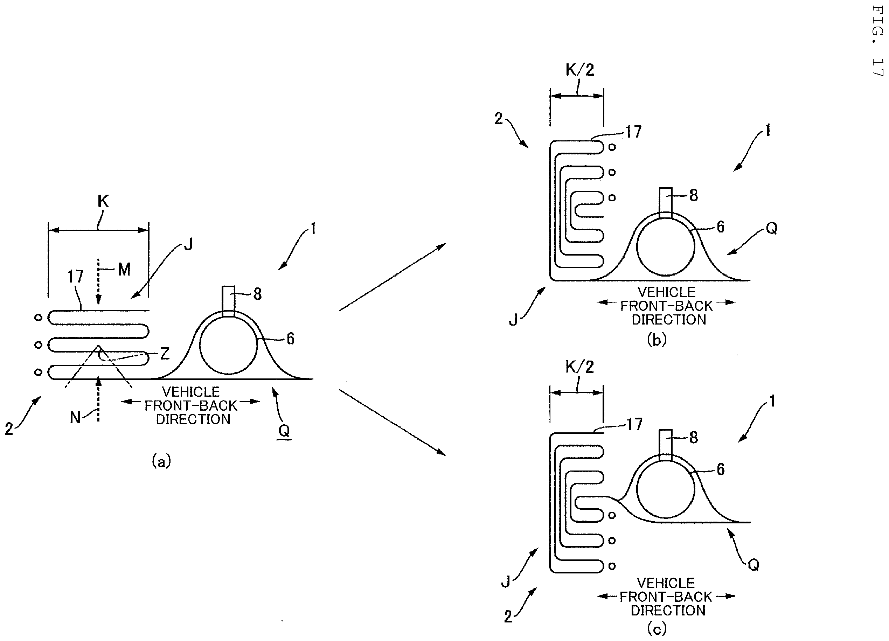

Fig. 17 shows a modification in which folding is carried out by bellows folding instead of rolling. Fig. 17(a) is a sectional view corresponding to Fig. 7 for the embodiment, Fig. 17(b) shows a section after an additional folding step, and Fig. 17(c) shows a section after yet another folding step.

According to the modification shown in Fig. 17, a bellows region (folding region) J for bellows folding (folding) is set, in the bellows folding step (folding step), the bellows region J is literally folded in a bellows manner (folded) and a bellows part (folded part) 17 is formed as shown in Fig. 17(a).

Then, the entire bellows part 17 is subjected to an additional folding step in order to halve its size in the vehicle front-back direction. In a first additional folding step shown in Fig. 17(b), the center of the bellows part 17 (having a size K in the vehicle front-back direction) in the vehicle front-back direction is folded downward from above into a valley fold (indicated by the arrow M in the drawing) and further laterally side by side to the side of the inflator 6, so that the folded part further from the inflator 6 is placed on the folded part nearer to the inflator 6 (indicated by the location 0 in the drawing) and the size of the bellows part 17 in the vehicle front-back direction is halved (the size in the vehicle in the front-back direction is K/2).

In a second additional folding step shown in Fig. 17(c), the center of the bellows part 17 in the vehicle front-back direction is folded upward from under into a mountain fold (indicated by the arrow N in the drawing), and the valley Z formed by the mountain fold is folded laterally side by side to the side of the inflator 6 toward the inflator 6, so that the folded part further from the inflator 6 is placed under the folded part nearer to the inflator 6 (indicated by the location 0 in the drawing) and the size of the bellows part 17 in the vehicle front-back direction is halved.

It is needless to mention that the modification may provide the same advantageous effects as the embodiment.

The vehicle side airbag module 1 manufactured by the method for manufacturing a vehicle side airbag module according to the embodiment can be applied preferably to either side in the vehicle left-right widthwise direction of the seat 3 seated by the occupant P.

The method for manufacturing a vehicle side airbag module and the vehicle side airbag device according to the embodiment have been described by referring to a vehicle in general provided with vehicle components such as doors having sufficient strength to protect the occupant. However, it is needless to mention that the method for manufacturing the vehicle side airbag module and the vehicle side airbag device according to the invention may be applied to a vehicle without doors or an extra small mobile having doors but without much strength.

The method for manufacturing the vehicle side airbag module 1 and the vehicle side airbag device described above are preferable embodiments of the present invention, and other embodiments may be carried out or achieved by various methods . The present invention is not limited by the detailed shapes, sizes, and positional arrangements of parts illustrated in the accompanying drawings unless otherwise specified. The expressions and terms herein are used for the purpose of description and should not be taken as limiting unless otherwise specified.

### [Reference Signs List]

- 1: Vehicle side airbag module
- 2: Side airbag
- 2b: bag surface of side airbag
- 3: Seat
- 3a: Seat back
- 6: Inflator
- 12: Rolled part
- 17: Bellows part
- 18: Rear chamber
- 19: Vent hole
- F: Folding line
- J: Bellows region
- P: Occupant
- Q: Inflator storing region
- R: Upper region
- S: Lower region
- T: Rolling region
- U: Rolling-up center

## Claims

1. A method for manufacturing a vehicle side airbag module having a side airbag (2) inflated and deployed from a seat back to a vehicle front side through a side of a seat (3) by inflator gas ejected from an inflator (6) stored inside,
the side airbag (2) having an inflator storing region (Q) provided on a rear side in a vehicle front-back direction to store the inflator (6), the method comprising the steps of:
folding an upper region (R) of the side airbag (2) above a folding line (F) on a lower region (S) thereof under the folding line (F) along the folding line (F), and setting on the side airbag (2) a folding region (T) for folding the side airbag (2) into a cone shape having a tapered upper part and a widened lower part, the folding line (F) being set across the side airbag (2) from a vehicle rear side to a vehicle front side; **characterized by**
folding the folding region (T) toward the inflator storing region (Q) with respect to at least one folding center (U) set on the folding line (F) as a reference for starting folding and forming a folded part (12), the folding line (F) defining an upper edge of the folding region (T), wherein
the folding center (U) is set on the bag surface (2b) in the side airbag (2) before the folding step.

2. The method for manufacturing a vehicle side airbag module of claim 1, wherein the side airbag (2) further includes a rear chamber (18) or an inner bag (18) having the inflator storing region (Q),
the rear chamber (18) or the inner bag (18) has a vent hole (19) provided at an upper part thereof in a vehicle up-down direction to introduce, from the rear chamber or the inner bag (18) into the side airbag (2), inflator gas from the inflator (6), and
the folding line (F) is provided above the vent hole (19) in the vehicle up-down direction.

3. The method for manufacturing a vehicle side airbag module of any one of claims 1 or 2, wherein the folded part (12) is formed by rolling.

4. The method for manufacturing a vehicle side airbag module of claim 3, further comprising reversely folding the folded part (12) formed by the rolling against the inflator storing region(Q) in a direction reversed from the rolling direction.

5. The method for manufacturing a vehicle side airbag module of claim 3, further comprising folding back the folded part (12) formed by the rolling against the inflator storing region (Q) in the same direction as the rolling direction.

6. The method for manufacturing a vehicle side airbag module of any one of claims 1 or 2, wherein the folded part (12) is formed by bellows folding.

7. The method for manufacturing a vehicle side airbag module of claim 6, further comprising additionally folding the entire folded part (12) formed by the bellows folding so that the size of the folded part (12) is halved in the vehicle front-back direction.

8. The method for manufacturing a vehicle side airbag module of any one of claims 1 to 7, wherein in the folding step, the upper region (R) is folded on the lower region (S) or the upper region (R) is tucked in the lower region (S).

9. The method for manufacturing a vehicle side airbag module of any one of claims 1 to 8, wherein the folding line (F) is set in a position higher than the inflator storing region (Q) in a height-wise direction.

10. The method for manufacturing a vehicle side airbag module of any one of claims 1 to 9, wherein the folding line (F) is set inclined obliquely from the vehicle rear side to the vehicle front side.

11. A vehicle side airbag device comprising a side airbag module manufactured by the method for manufacturing a vehicle side airbag module of any one of claims 1 to 10, wherein the side airbag module is provided at the seat (3), and the side airbag (2) is inflated and deployed by inflator gas to restrict an occupant sitting in the seat (2) from moving in a vehicle widthwise direction.

12. A vehicle side airbag device comprising a side airbag module manufactured by the method for manufacturing a vehicle side airbag module of any one of claims 1 to 10, wherein the side airbag module is provided at the seat (3), and the side airbag (2) is inflated and deployed by inflator gas to protect an occupant sitting in the seat upon a collision from a side of the vehicle.

## Patentansprüche

1. Verfahren zum Herstellen eines Seitenairbagmoduls für Fahrzeuge mit einem Seitenairbag (2), der von einer Rückenlehne zu einer Fahrzeugvorderseite durch eine Seite eines Sitzes (3) mittels eines aus einem innenliegenden Gasgenerator (6) stammenden Füllgases aufgeblasen und entfaltet wird,
wobei der Seitenairbag (2) einen Aufbewahrungsbereich (Q) für den Gasgenerator aufweist, der auf einer Rückseite in einer innerhalb des Fahrzeugs von vorne nach hinten verlaufenden Richtung vorgesehen ist, um den Gasgenerator (6) aufzubewahren, wobei das Verfahren die folgenden Schritte umfasst:
Falten eines oberen Bereichs (R) des Seitenairbags (2) über einer Faltlinie (F) auf einen unteren Bereich (S) davon unter der Faltlinie (F) entlang der Faltlinie (F), und Festlegen eines Faltbereichs (T) auf dem Seitenairbag (2) zum Falten des Seitenairbags (2) in eine Kegelform mit einem verjüngten oberen Teil und einem verbreiterten unteren Teil, wobei die Faltlinie (F) quer auf dem Seitenairbag (2) von einer Fahrzeugrückseite zu einer Fahrzeugfrontseite festgelegt ist; **gekennzeichnet durch**
Falten des Faltbereichs (T) in Richtung des Aufbewahrungsbereichs (Q) für den Gasgenerator in Bezug auf mindestens einen Faltmittelpunkt (U), der auf der Faltlinie (F) als Bezug für den Beginn des Faltvorgangs und das Bilden eines gefalteten Teils (12) festgelegt ist, wobei die Faltlinie (F) eine Oberkante des Faltbereichs (T) definiert, wobei
der Faltmittelpunkt (U) vordem Faltschritt auf der Sack-Oberfläche (2b) im Seitenairbag (2) festgelegt ist.

2. Verfahren zum Herstellen eines Seitenairbagmoduls für Fahrzeuge nach Anspruch 1, wobei der Seitenairbag (2) ferner eine hintere Kammer (18) oder einen Innensack (18) mit dem Aufbewahrungsbereich (Q) für den Gasgenerator beinhaltet,
die hintere Kammer (18) oder der Innensack (18) ein Lüftungsloch (19) aufweist, das an einem oberen Teil davon in einer innerhalb des Fahrzeugs von oben nach unten verlaufenden Richtung vorgesehen ist, um Füllgas aus dem Gasgenerator (6) von der hinteren Kammer oder dem Innensack (18) in den Seitenairbag (2) einzuführen, und
die Faltlinie (F) oberhalb des Lüftungslochs (19) in der innerhalb des Fahrzeugs von oben nach unten verlaufenden Richtung vorgesehen ist.

3. Verfahren zum Herstellen eines Seitenairbagmoduls für Fahrzeuge nach einem der Ansprüche 1 oder 2, wobei der gefaltete Teil (12) durch Rollen gebildet wird.

4. Verfahren zum Herstellen eines Seitenairbagmoduls für Fahrzeuge nach Anspruch 3, ferner umfassend das umgekehrte Falten des gefalteten Teils (12), das durch das Rollen gegen den Aufbewahrungsbereich (Q) für den Gasgenerator in einer der Rollrichtung entgegengesetzten Richtung gebildet wird.

5. Verfahren zum Herstellen eines Seitenairbagmoduls für Fahrzeuge nach Anspruch 3, ferner umfassend das Zurückfalten des gefalteten Teils (12), das durch das Rollen gegen den Aufbewahrungsbereich (Q) für den Gasgenerator in der gleichen Richtung wie die Rollrichtung gebildet wird.

6. Verfahren zum Herstellen eines Seitenairbagmoduls für Fahrzeuge nach einem der Ansprüche 1 oder 2, wobei der gefaltete Teil (12) durch Ziehharmonikafaltung gebildet ist.

7. Verfahren zum Herstellen eines Seitenairbagmoduls für Fahrzeuge nach Anspruch 6, ferner umfassend das zusätzliche Falten des gesamten gefalteten Teils (12), der durch Ziehharmonikafaltung derart gebildet wird, dass die Größe des gefalteten Teils (12) in einer innerhalb des Fahrzeugs von vorne nach hinten verlaufenden Richtung halbiert wird.

8. Verfahren zum Herstellen eines Seitenairbagmoduls für Fahrzeuge nach einem der Ansprüche 1 bis 7, wobei der obere Bereich (R) im Faltschritt auf den unteren Bereich (S) gefaltet wird oder der obere Bereich (R) im unteren Bereich (S) verstaut wird.

9. Verfahren zum Herstellen eines Seitenairbagmoduls für Fahrzeuge nach einem der Ansprüche 1 bis 8, wobei die Faltlinie (F) in einer Position festgelegt ist, die in einer auf die Höhe bezogenen Richtung höher als der Aufbewahrungsbereich (Q) für den Gasgenerator liegt.

10. Verfahren zum Herstellen eines Seitenairbagmoduls für Fahrzeuge nach einem der Ansprüche 1 bis 9, wobei die Faltlinie (F) von der Fahrzeugrückseite zur Fahrzeugvorderseite geneigt festgelegt ist.

11. Fahrzeugseitenairbagvorrichtung, umfassend ein Seitenairbagmodul, das nach dem Verfahren zum Herstellen eines Seitenairbagmoduls für Fahrzeuge nach einem der Ansprüche 1 bis 10 hergestellt ist, wobei das Seitenairbagmodul am Sitz (3) vorgesehen ist, und der Seitenairbag (2) durch Füllgas aufgeblasen und entfaltet wird, um einen im Sitz (2) sitzenden Insassen daran zu hindern, sich in einer breitseitigen Richtung des Fahrzeugs zu bewegen.

12. Fahrzeugseitenairbagvorrichtung, umfassend ein Seitenairbagmodul, das nach dem Verfahren zum Herstellen eines Seitenairbagmoduls für Fahrzeuge nach einem der Ansprüche 1 bis 10 hergestellt ist, wobei das Seitenairbagmodul am Sitz (3) vorgesehen ist, und der Seitenairbag (2) durch Füllgas aufgeblasen und entfaltet wird, um einen im Sitz sitzenden Insassen bei einer Kollision von einer Seite des Fahrzeugs zu schützen.

## Revendications

1. Procédé de fabrication d'un module de coussin gonflable de sécurité latéral pour véhicule présentant un coussin gonflable de sécurité latéral (2) qui se gonfle et se déploie vers l'avant du véhicule à partir du dossier d'un siège (3) en passant par un côté du siège sous l'effet d'un gaz de gonflage éjecté d'un gonfleur (6) disposé à l'intérieur,
le coussin gonflable de sécurité latéral (2) présentant une zone de logement de gonfleur (Q) prévue sur l'arrière, dans le sens avant-arrière du véhicule, et destinée à loger le gonfleur (6), le procédé comprenant les étapes consistant à:
replier une zone supérieure (R) du coussin gonflable de sécurité latéral (2), située au-dessus d'une ligne de pliage (F), sur une zone inférieure (S) du coussin située sous la ligne de pliage (F), le long de ladite ligne de pliage (F), et établir, sur le coussin gonflable de sécurité latéral (2), une zone de pliage (T) destinée au pliage du coussin gonflable de sécurité latéral (2) selon une forme conique présentant une partie supérieure effilée et une partie inférieure élargie, la ligne de pliage (F) traversant le coussin gonflable de sécurité latéral (2) entre le côté tourné vers l'arrière du véhicule et le côté tourné vers l'avant du véhicule; **caractérisé par**
le pliage de la zone de pliage (T) vers la zone de logement de gonfleur (Q) relativement à au moins un centre de pliage (U) établi sur la ligne de pliage (F) en tant que référence pour le commencement du pliage, et la formation d'une partie pliée (12), la ligne de pliage (F) définissant une arête supérieure de la zone de pliage (T); et dans lequel
le centre de pliage (U) est établi sur la surface (2b) du coussin gonflable de sécurité latéral (2) avant l'étape de pliage.

2. Procédé de fabrication d'un module de coussin gonflable de sécurité latéral pour véhicule selon la revendication 1, dans lequel le coussin gonflable de sécurité latéral (2) comporte en outre une chambre arrière (18) ou une poche intérieure (18) présentant la zone de logement de gonfleur (Q),
la chambre arrière (18) ou la poche intérieure (18) présente un évent (19) prévu dans une partie supérieure de celle-ci, dans le sens haut-bas du véhicule, pour introduire dans le coussin gonflable de sécurité latéral (2), depuis la chambre arrière ou la poche intérieure (18), du gaz de gonflage émanant du gonfleur (6), et
la ligne de pliage (F) est prévue au-dessus de l'évent (19), dans le sens haut-bas du véhicule.

3. Procédé de fabrication d'un module de coussin gonflable de sécurité latéral pour véhicule selon l'une quelconque des revendications 1 et 2, dans lequel la partie pliée (12) est formée par enroulement.

4. Procédé de fabrication d'un module de coussin gonflable de sécurité latéral pour véhicule selon la revendication 3, comprenant en outre le pliage en sens inverse de la partie pliée (12), formée par l'enroulement, contre la zone de logement de gonfleur (Q), dans un sens opposé à celui de l'enroulement.

5. Procédé de fabrication d'un module de coussin gonflable de sécurité latéral pour véhicule selon la revendication 3, comprenant en outre le rabattement de la partie pliée (12), formée par l'enroulement, contre la zone de logement de gonfleur (Q), dans le même sens que celui de l'enroulement.

6. Procédé de fabrication d'un module de coussin gonflable de sécurité latéral pour véhicule selon l'une quelconque des revendications 1 et 2, dans lequel la partie pliée (12) est formée par un pliage en accordéon.

7. Procédé de fabrication d'un module de coussin gonflable de sécurité latéral pour véhicule selon la revendication 6, comprenant en outre le pliage supplémentaire de la totalité de la partie pliée (12) formée par le pliage en accordéon de manière que la taille de la partie pliée (12) soit divisée par deux dans le sens avant-arrière du véhicule.

8. Procédé de fabrication d'un module de coussin gonflable de sécurité latéral pour véhicule selon l'une quelconque des revendications 1 à 7, dans lequel, au cours de l'étape de pliage, la zone supérieure (R) est pliée sur la zone inférieure (S), ou la zone supérieure (R) est rentrée dans la zone inférieure (S).

9. Procédé de fabrication d'un module de coussin gonflable de sécurité latéral pour véhicule selon l'une quelconque des revendications 1 à 8, dans lequel la ligne de pliage (F) est établie dans une position supérieure à la zone de logement de gonfleur (Q), vu dans le sens de la hauteur.

10. Procédé de fabrication d'un module de coussin gonflable de sécurité latéral pour véhicule selon l'une quelconque des revendications 1 à 9, dans lequel la ligne de pliage (F) est inclinée à l'oblique entre le côté tourné vers l'arrière du véhicule et le côté tourné vers l'avant du véhicule.

11. Dispositif à coussin gonflable de sécurité latéral pour véhicule comprenant un module de coussin gonflable de sécurité latéral fabriqué suivant le procédé de fabrication d'un module de coussin gonflable de sécurité latéral pour véhicule selon l'une quelconque des revendications 1 à 10, dans lequel le module de coussin gonflable de sécurité latéral est prévu au niveau du siège (3), et le coussin gonflable de sécurité latéral (2) se gonfle et se déploie sous l'effet d'un gaz de gonflage afin de limiter le mouvement de l'occupant du siège (2) dans le sens de la largeur du véhicule.

12. Dispositif à coussin gonflable de sécurité latéral pour véhicule comprenant un module de coussin gonflable de sécurité latéral fabriqué suivant le procédé de fabrication d'un module de coussin gonflable de sécurité latéral pour véhicule selon l'une quelconque des revendications 1 à 10, dans lequel le module de coussin gonflable de sécurité latéral est prévu au niveau du siège (3), et le coussin gonflable de sécurité latéral (2) se gonfle et se déploie sous l'effet d'un gaz de gonflage afin de protéger l'occupant du siège en cas de collision par le côté du véhicule.
